# EUROPÄISCHE PATENTSCHRIFT

(11) **EP 3 173 202 B1**
(45) Veröffentlichungstag und Bekanntmachung des Hinweises auf die Patenterteilung: **02.08.2023**
(21) Anmeldenummer: 16200486.5
(22) Anmeldetag: 24.11.2016
(51) Int. Cl.: B28B 1/24, B28B 11/24, B24B 7/16, B24B 7/22, C04B 35/486, C04B 35/634, C04B 35/638, C04B 35/645

(54) **SPEZIAL-KERAMIKBAUTEILE**
SPECIAL PURPOSE CERAMIC COMPONENTS
COMPOSANT EN CÉRAMIQUE SPÉCIAL

(30) Priorität: 27.11.2015 CH 17372015
(43) Veröffentlichungstag der Anmeldung: 31.05.2017
(73) Patentinhaber: maxon international ag, 6072 Sachseln (CH)
(72) Erfinder: ZIMMERMANN, Dirk, 79350 Sexau (DE)
(74) Vertreter: IPrime Rentsch Kaelin AG

(56) Entgegenhaltungen:
- EP-A1- 0 943 592
- EP-A2- 1 710 063
- WO-A1-2013/027570
- DE-A1-102005 055 524
- DE-A1-102009 044 461
- GB-A- 948 200
- JP-A- H03 281 158
- US-A1- 2007 264 376
- US-A1- 2010 119 767

## Beschreibung

Die vorliegende Erfindung betrifft ein Verfahren zur Herstellung von Keramikbauteilen, insbesondere von Keramikbauteilen mit Ausnehmungen und/oder Hohlräumen, gemäss dem Oberbegriff des unabhängigen Anspruchs 1.

### Technologischer Hintergrund

Technische Keramiken haben sich wegen ihrer vorteilhaften Materialeigenschaften für viele Anwendungen etabliert. Je nach verwendetem Keramikmaterial lassen sich Eigenschaften erhalten, die mit anderen Werkstoffen wie Metallen und Polymeren in dieser Art und Kombination nicht möglich wären. Vorteilhafte Eigenschaften verschiedener Keramikmaterialien sind unter anderem hohe mechanische Festigkeit und Steifigkeit, hohe Härte und Abriebfestigkeit, Hitzebeständigkeit, hohe Dielektrizitätskonstanten und gute Biokompatibilität.

Als Beispielhafte Beschreibung der Anwendung technischer Keramik für Getriebebauteile, der damit Verbundenen Vorteile und eines möglichen Herstellungsprozesses wird verwiesen auf: Zimmermann, Dirk; Keramische Bauteile für hochbeanspruchte Kleinantriebe; in: Antriebstechnik, F&M, 105 (1997) 4, Carl Hanser Verlag, München, 1997, S. 21 7-220; sowie auf: Zimmermann, Dirk; Keramik in Antrieben; in: at - Aktuelle Technik, 2/2002, B+L Verlags AG, Schlieren, 2002, S.26-28.

Keramikbauteile können verschiedenartige Ausnehmungen oder Hohlräume aufweisen. Als Ausnehmungen können jegliche regelmässige oder unregelmässige Vertiefung in der Oberfläche eines Keramikbauteils angesehen werden. So können beispielsweise Räume zwischen den Zähnen eines keramischen Zahnrades als Ausnehmung betrachtet werden. Eine axiale Durchgangsbohrung im Zahnrad kann als Hohlraum betrachtet werden.

Die Ausnehmungen und Hohlräume können neben mechanischen auch weitere Funktionen haben. Beispielsweise können Sie dabei helfen, das Gewicht eines Keramikbauteils bei im Wesentlichen gleichbleibender Stabilität herabzusetzen, um Keramik-Leichtbauteile bereitzustellen. Sie können als Kanäle oder Durchlässe für jegliche Art von Fluiden, Strahlungen, Schall, usw. dienen.

Verfahren zur Herstellung von Keramikbauteilen mit Ausnehmungen und/oder Hohlräumen sind aus dem Stand der Technik bekannt. So beschreibt die WO1 4202700A1 beispielsweise ein Verfahren zur Herstellung keramischer Abschirmteile unter Bildung von Kammern durch Aufbringung verschiedener Lagen im Grünzustand. Eine erste Lage wird bereitgestellt und anschliessend eine Zwischenlage auf einer freien Seite der ersten Lage generiert. Sich in Längs- und Querrichtung der ersten Lage erstreckende Stege der Zwischenlage bilden Kammern oder Becken aus, auf die durch auflegen einer weiteren Lage geschlossenen Kammern. Abschliessend wird der Verbund aus erster Lage, Zwischenlage und zweiter Lage zum keramischen Abschirmteil gebrannt. Die Kammern der Zwischenlage können mit einem Füllstoff beschickt werden, um Wärmedämmeigenschaften des Abschirmteils zu verbessern.

Die WO1 4029483A1 beschreibt ein Verfahren zum Herstellen von Grünkörpern in mehreren Schichten unter Verwendung eines pyrolisierbaren Bindemittels. Durch den schichtweisen Aufbau sollen Grünkörper mit sich in einer Richtung ändernden Querschnitten erzeugbar sein. Das Auftragen der Schichten kann z.B. durch ein Tampondruckverfahren erfolgen. Dem Bindemittel werden gegebenenfalls sinterfähige Partikel zugegeben, die nach dem Sintern reaktiv entfernt werden können. Bei ausreichender mechanischer Festigkeit des Grünlings können in bestimmten Bereichen Partikel weggelassen werden, so dass diese Bereiche bei der Pyrolyse entfernt werden.

Die US4806295A beschreibt ein Verfahren zur Herstellung einer keramischen monolithischen Struktur mit Kavität und Passagen, wobei dünne Schichten keramischen Materials ausgelegt und zur Bildung von Löchern, Kanälen oder anderen Formen geschnitten oder gestanzt werden. Die Schichten werden dann zu einem Stapel geschichtet und darin enthaltene Löcher oder Kanäle mit einem Stützmedium, wie beispielsweise einem Paraffinwachs aufgefüllt. Danach wird die geschichtete Struktur zusammengepresst und anschliessend in einem Vorbrennschritt das Stützmedium vollständig entfernt. Abschliessend wird der gepresste Stapel gesintert.

Alternativ befasst sich die CN102092083A mit einem Verfahren zur Herstellung eines keramischen Gehäuses mit einem zylindrischen Hohlraum durch giessen keramischer Massen in eine zweiteilige Gussform. Die beiden Teile der Form weisen jeweils eine halbzylindrische Nut auf, die gemeinsam einen den Hohlraum umschreibenden Zylinder ausbilden, in den ein aufblasbarer Schlauch eingelegt wird.

Ferner beschreibt die US2001053937A ein Verfahren zur Herstellung von Knochenersatzmaterial mit steifem durchgängigem keramischem Stützwerk, wobei zunächst zur Erzeugung eines Schlickers aus Keramikpulver, beispielsweise Zirkonoxid, einem organischen Binder und Wasser eine Dispersion geformt wird. Dann wird die Stützstruktur eines netzartigen offenporigen organischen Schaums, beispielsweise aus Polyurethan, Polyester Polyether oder ähnlichem, mit dem Schlicker überzogen. Dazu kann der Schaum in den Schlicker getaucht und überschüssiger Schlicker anschiessend entfernt werden. Danach wird der übrige Schlicker getrocknet, die Stützstruktur unterhalb einer Sintertemperatur pyrolisiert und abschliessend das verbleibende keramische Stützwerk gesintert.

Das Verhalten des in der US2001053937A beschriebenen keramischen Stützwerks bei Einwirkung mechanischer Belastungen soll verbessert werden, indem in dessen Zwischenräume ein osteokonduktives Material sowie zwischen diesem und dem Stützwerk ein bioresorbierbares elastisches Material eingebracht werden. Beim osteokonduktiven Material kann es sich um eine weitere Keramik, wie beispielsweise Kalziumphosphat, handeln, das zusammen mit einem organischen Binder nach dem ersten Sintern und Abkühlen in die Zwischenräume des Stützwerks eingebracht wird. Nach einem weiteren Sinterschritt ist der Binder pyrolisiert und das Kalziumphosphat bildet eine weitere netzartige Struktur, die aufgrund Schwindung beim Sintern vom Stützwerk beabstandet ist. Die Ablösung des Kalziumphosphats vom Stützwerk lässt sich verbessern, indem letzteres vorab mit Paraffin leicht benetzt wird. Der verbleibende Zwischenraum wird mit dem bioresorbierbaren elastischen Material gefüllt, wobei es sich beispielsweise um ein Polymer wie Collagen handeln kann, das von einem Körper resorbiert wird, sobald dessen eigenes Knochenmaterial beim Heilungsprozess in die Zwischenräume hinein wächst. Das osteokonduktive Material kann alternativ auch erst während eines chirurgischen Eingriffs in die Zwischenräume der mit dem bioresorbierbaren elastischen Material beschichteten Stützstruktur beschichteten Stützwerks eingebracht werden.

Bei den aus dem Stand der Technik bekannten Verfahren ist von Nachteil, dass sie modernen Produktionsanforderungen nicht gerecht werden. So ist die Verfahrensdauer der genannten Verfahren zu lang bzw. die Produktionsgeschwindigkeit lässt sich nicht wie gewünscht steigern. Darüber hinaus können die bekannten Verfahren nicht mit dem stetigen Bedürfnis zur Verkleinerung von Bauteilen mithalten bzw. stossen sie hier schlicht an ihre Grenzen. Damit einhergehend oder zusätzlich weisen mit den bekannten Verfahren hergestellte Keramikteile mit Ausnehmungen und/oder Hohlräumen oftmals keine zur mechanischen Weiterverarbeitung erforderliche Stabilität auf.

Diese Nachteile lassen sich zum Teil mindern oder vermeiden, indem Grünkörper durch Spritzgiessen mit polymerisierender und/oder geschmolzener thermoplastischer Massen hergestellt werden, welche keramische Partikel beinhalten. Hierbei ist es allerdings oft schwierig, die Kavität des Spritzgusswerkzeugs fehlerfrei zu füllen, wenn darin z.B. enge Spalte oder scharfe Umlenkungen das Fliessen der Schmelze ver- oder behindern. Speziell bei Mehrfachkavitäten kann dies ein Hindernis im Füllprozess darstellen und das entstandene Bauteil erhält nach der Polymerisation bzw. dem Erstarren Lunker, Spannungen oder Fliesslinien, die zu Nachteilen führen oder das Bauteil gar unbrauchbar machen können. Speziell beim Pulverspritzguss ist dies ein häufig auftretender Effekt, der insbesondere bei sehr kleinen Bauteilen auftritt. Deswegen sollte bei sehr kleinen Bauteilen der Anguss so gross wie nötig bemessen werden, um die Kavität sicher zu füllen. Jedoch kann sich dann wiederum der Angusspunkt störend im späteren Einsatz eines Miniaturbauteils auswirken.

Bei den aus dem Stand der Technik bekannten Pulverspritzgussverfahren ist also weiterhin von Nachteil, dass ein gleichmässiges Füllen der Kavität ohne störende Fliessfronten erschwert ist. Speziell bei Bauteilen mit Bohrungen können unregelmässige Füllungen problematisch sein. Um hier Abhilfe zu schaffen, kann zwar der Druck beim Spritzgiessen erhöht werden. Jedoch können hohe Drücke von beispielsweise 1000 bar an relativ kleinen Öffnungen mit Durchmessern von beispielsweise 0.1 mm an oder in den Kavitäten problematisch sein, weil dadurch sehr hohe Fliessgeschwindigkeiten auftreten. Die daraus resultierenden Reibungen führen zu hohen Temperaturen, welche die zu polymerisierenden und/oder geschmolzenen thermoplastischer Massen, das sogenannte Bindersystem, schädigen können.

Aus US 2007/264376 A1 ist ein Verfahren zur Herstellung von Keramikbauteilen, gemäß dem Oberbegriff des Anspruchs 1, bekannt.

### Darstellung der Erfindung

Aufgabe der Erfindung ist es, vorteilhafte Verfahren zur Herstellung von Keramikteilen zur Verfügung zu stellen. Solche Herstellungsverfahren sollen eine hohe Prozesssicherheit aufweisen und eine gleichbleibende hohe Qualität der Keramik sicherstellen.

Diese und andere Aufgaben werden gelöst durch ein erfindungsgemässes Herstellungsverfahren gemäss dem unabhängigen Anspruch.

Insbesondere werden die Nachteile aus dem Stand der Technik überwunden, indem das hergestellte Keramikteil einen Träger oder Tragabschnitt umfasst, der bei der weiteren Verarbeitung von wenigstens einem Keramikbauteil entfernt wird.

Dies hat gegenüber dem Stand der Technik die Vorteile, dass eine grosse Anzahl auch von kleinsten Bauteilen in einem Spritzgiesswerkzeug fehlerfrei hergestellt werden kann. Mit anderen Worten können z.B. mehr als zwei Bauteile auf einem gemeinsamen Träger bzw. einer gemeinsamen Grundplatte monolithisch gefertigt und über die Grundplatte die Kavität der Gussform über eine gesamte projizierte Fläche der Bauteile axial gefüllt werden. Die Entlüftung der Kavitäten geschieht dabei über deren Spalte bzw. Öffnungen. Möglichst grosse Anspritzflächen ermöglichen relativ geringe Drücke und somit geringe Fliessgeschwindigkeiten. Daher ermöglicht ein erfindungsgemässes Verfahren ein stabiles Gesamtsystem zum Fertigen von Keramikbauteilen.

Des Weiteren kann an einem durch ein erfindungsgemässes Verfahren hergestellten Bauteil der Anspritzpunkt entfernt bzw. kein Anspritzpunkt feststellbar sein. Etwaige nachteilige Gefügeveränderungen im Bereich des Anspritzpunktes können vermieden werden. In Bereichen des Bauteiles, von denen der Träger oder Tragabschnitt entfernt wurde, kann das Bauteil eine andere Oberflächenbeschaffenheit aufweisen als an seinen übrigen Bereichen. In besagten Bereichen sind womöglich Trennspuren zu erkennen, die aus dem Entfernen des Trägers oder Tragabschnittes resultieren können. Zudem kann der Träger oder Tragabschnitt zur Verbesserung des Handlings dienen. Insbesondere können Auswurf-, Greif- und/oder Spannwerkzeuge am Träger bzw. Tragabschnitt angreifen bzw. sich dort abstützen, ohne in direktem Kontakt mit dem Keramikbauteil bzw. dessen Grün- oder Braunkörper zu stehen, wodurch diese vor Beschädigungen geschützt werden.

Ferner können durch ein erfindungsgemässes Verfahren Strukturen im Keramikbauteil erzeugt werden, die zunächst durch den Träger bzw. die Trägerplatte verdeckt und erst nach deren Entfernung offengelegt sind. Bei derartigen Strukturen kann es sich beispielsweise um Sacklöcher handeln, die zunächst nur bauteilseitig geöffnet sind und mit ihren Böden im Träger bzw. der Trägerplatte enden. Nach Entfernen des Trägers bzw. der Trägerplatte sind die Böden entfernt und aus den Sacklöchern somit Durchgangslöcher geworden.

Auch ist es möglich, den Träger bzw. die Trägerplatte zumindest teilweise stehen zu lassen und beispielsweise nach einer Nivellierung oder sonstigen Oberflächenbearbeitung sozusagen "back-to-back" mit einer weiterem Träger bzw. einer weiteren Trägerplatte zu verbinden. Die Verbindung kann sowohl im Grünzustand als auch im gesinterten Zustand vollzogen werden. Somit lassen sich keramische Bauteile in Sandwichbauweise herstellen. Die erfindungsgemäße Lösung kann durch die folgenden weiteren, jeweils für sich vorteilhaften Ausführungsformen beliebig ergänzt und weiter verbessert werden:
Erfindungsgemäß hält der Träger oder Tragabschnitt eine Vielzahl von Keramikbauteilen, die durch das Entfernen vereinzelt werden. Dies hat den Vorteil, dass eine Vielzahl womöglich standardisierter und/oder miniaturisierter Bauteile gleicher Qualität im Wesentlichen in einem Arbeitsgang effizient hergestellt werden können. Der Träger oder Tragabschnitt kann dazu beispielsweise platten- oder scheibenartig ausgeformt sein und auf einer seiner Flachseiten eine Vielzahl von Bauteilen halten, die durch das Entfernen des Trägers vereinzelt werden.

Gemäss einer weiteren Ausführungsform wird durch das Entfernen des Trägers oder Tragabschnittes mindestens ein Hohlraum oder eine Ausnehmung am wenigstens einen Keramikbauteil freigelegt. Vorteilhafter Weise braucht die somit geschaffene Freilegung bzw. Öffnung zum Hohlraum oder zur Ausnehmung nicht schon bei der Herstellung der Urform des Bauteils berücksichtigt werden. Bei der Ausgestaltung der Urform des Bauteils können andere Aspekte als die Öffnung selber berücksichtigt oder betont werden, die ansonsten nicht zu realisieren wären oder als Auslegungsschwerpunkt zur Geltung kommen könnten. Vor dem Entfernen den Trägers kann der Hohlraum oder die Ausnehmung beispielsweise in Form eines Sackloches vorliegen, das durch entfernen seines durch den Träger oder Tragabschnitt gebildeten Bodens geöffnet und somit zum Durchgangsloch wird.

Gemäss einer weiteren Ausführungsform bildet der mindestens eine Hohlraum oder die mindestens eine Ausnehmung wenigstens abschnittsweise eine Durchgangsöffnung im wenigstens einen Keramikbauteil. Bei der Durchgangsöffnung kann es sich beispielsweise um eine Nabe bzw. eine Achsaufnahme eines Zahnrades handeln. Alternativ oder zusätzlich können im Bereich der Durchgangsöffnung Fasen oder Hinterschnitte ausformt sein, die sich ohne Träger oder Tragabschnitt nicht oder nur schwierig fertigen lassen.

Erfindungsgemäß wird der Träger oder Tragabschnitt vollständig abgetragen. Zwischen Bauteil und Träger kann ein Tolleranzabschnitt vorgesehen sein, der soweit abtragbar ist, dass eine masshaltige Herstellung des Bauteils bzw. der Bauteile gewährleistet werden kann. Durch ein vollständiges Entfernen des Trägers können Fertigungstolleranzen ausgeglichen werden. Dies kann insbesondere von Vorteil sein, wenn der Träger auf einer seiner Flachseiten eine Vielzahl von Bauteilen hält, die durch das vollständige Entfernen vereinzelt werden.

Gemäss einer weiteren Ausführungsform wird das gesinterte Keramikteil bei der weiteren Verarbeitung zerspant. Zum Zerspanen kann das Keramikteil beispielsweise geschliffen, gefräst und/oder geläppt werden. Zwar mag der Materialabtrag beim Schleifen, Fräsen und/oder Läppen relativ gering sein und das Entfernen des Trägers bzw. Tragabschnittes somit mehrere Stunden dauern. Jedoch kann das Entfernen so sehr kontrolliert und präzise erfolgen, ohne die Oberflächenbeschaffenheit des oder der Bauteile auf ungewünschte Art zu beeinträchtigen oder das Bauteil beispielsweise durch Ausbrüche zu beschädigen.

Erfindungsgemäß wird das gesinterte Keramikteil zur weiteren Verarbeitung wenigstens abschnittsweise in eine Haltemasse eingebettet. Durch das Einbetten kann das Keramikteil durch die Haltemasse zur weiteren Verarbeitung geschützt und somit besser handhabbar sein als das nackte Keramikteil. Insbesondere erleichtert das Einbetten ein Greifen bzw. einspannen des Keramikteils, da die Haltemasse zum einen Ausnehmungen und Hohlräume im Keramikteil füllen und dieses somit zur verbesserten Aufnahme und Verteilung von Druckkräften stabilisieren kann. Zum Anderen kann die Haltemasse eine Aussenkontur des Keramikteils zumindest abschnittsweise umschliessen und einem Greifer und/oder Spannfutter somit eine vergrösserte Angriffsfläche bieten sowie darüber hinaus dazu dienen, etwaige Vibrationen aufzunehmen bzw. zu absorbieren, wodurch sich das Keramikteil möglichst fest und verschiebesicher halten bzw. einspannen lässt.

Darüber hinaus kann die Haltemasse dazu dienen, vom Träger bzw. Tragabschnitt zu trennenden bzw. zu vereinzelnde Bauteile zumindest abschnittsweise zu umschliessen. Dies bewirkt zum einen wiederum einen Schutz der Bauteile, da insbesondere deren Aussenkonturen mit einer von der Haltemasse gebildeten Schutzschicht umgeben sein können. Zum anderen können zum Vereinzeln vom Träger bzw. Tragabschnitt abzutrennende bzw. zu befreiende Bauteile in der Haltemasse nach dem Entfernen zumindest vorübergehend weiterhin durch die Haltemasse zusammengehalten sein, was eine Handhabung der Bauteile vereinfacht.

Gemäss einer weiteren Ausführungsform wird das Keramikteil in die Haltemasse eingedrückt. Dazu kann die Haltemasse beispielsweise in einem hochviskosen Zustand in einem Behälter und/oder auf einer Unterlage entformbar bereitgestellt werden. Das Keramikteil kann dann von oben herab bis zu einem beliebigen Grad in die Haltemasse eingedrückt bzw. eingetaucht werden.

Gemäss einer weiteren Ausführungsform wird die Haltemasse nach der weiteren Verarbeitung mit bzw. in einem Lösungsmittel vom Keramikteil ab- und/oder aufgelöst. Die Haltemasse kann rückstandsfrei vom Keramikbauteil entfernt werden. Die Haltemasse kann also lediglich als vorübergehend verwendeter Hilfsstoff wieder verwertbar sein und braucht die Eigenschaften des endgültigen Keramikbauteils nicht zu beeinflussen.

Gemäss einer weiteren Ausführungsform ist die Haltemasse wasser- und/oder alkohollöslich und wird nach der weiteren Verarbeitung des Keramikteils bzw. Keramikbauteils in Wasser und/oder einem Alkohol gelöst. Wasser und/oder Alkohol können vorteilhafter Weise umweltverträglich entsorgt bzw. wiederverwertet werden und sind in der Regel relativ einfach und risikolos handhabbar.

Gemäss einer weiteren Ausführungsform ist die Haltemasse im Wesentlichen aus Zucker und/oder Harz gebildet. Zucker und/oder Harz sind in der Regel bei Raumtemperatur gut in Wasser bzw. Alkohol lösbar. Zucker und Harz können in einem die jeweiligen Anforderungen befriedigendem Verhältnis miteinander gemischt und/oder in verschiedenen Schichten als Haltemasse verwendet werden. Als Harze können insbesondere natürliche Harze verwendet werden. Alternativ oder zusätzlich können auch Lacke und Kunststoffe als Haltemasse verwendet werden. Aus natürlichen Quellen kann beispielsweise Gummilack bzw. daraus gewonnener Schellack zur Anwendung kommen.

Gemäss einer weiteren Ausführungsform dringt die Haltemasse in wenigstens einen Freiraum des Keramikteils, des Trägers und/oder des Tragabschnitts ein, um einen zur weiteren Verarbeitung erforderlichen Einbettungsgrad des Keramikteils, der Trägers und/oder des Tragabschnitts zu überprüfen bzw. zu gewährleisten. Etwaige Freiräume in Form von Aussparungen und/oder Öffnungen können insbesondere ein kontrollierbares Eindrücken des Keramikteils in die Haltemasse ermöglichen. Die Haltemasse kann dabei in die Freiräume eindringen.

Bei einem platten- bzw. scheibenförmigen Träger bzw. Tragabschnitt können Freiräume helfen, dessen Flachseite ordnungsgemäss möglichst flächig mit der Haltemasse in Kontakt zu bringen. Erfindungsgemäß werden mehrere Keramikbauteile auf einer Flachseite des Trägers angeordnet von der Haltemasse umschlossen, indem besagte Flachseite soweit in die Haltemasse eingedrückt wird, dass diese möglichst vollständig mit der Haltemasse in Kontakt steht. Im Träger können Freiräume in Form von fensterartigen Durchgangslöchern ausgeformt sein, über die von einer der die Bauteile tragenden Flachseite gegenüberliegenden Seite des Trägers aus kontrolliert werden kann, ob die Flachseite zufriedenstellend mit der Haltemasse in Kontakt steht.

Die Freiräume selber können den jeweiligen Anforderungen gemäss beliebig angeordnet und ausgeformt sein. Beispielsweise kann eine Vielzahl von Freiräumen symmetrisch am Träger angeordnet sein, was dabei hilft, eine vollflächige Auflage bzw. Einbettung der Flachseite zu überprüfen. Auf ihrer von der Flachseite abgewandten Seite können die Freiräume mit einer Fase versehen oder anderweitig derartig ausgestaltet sein, dass ein Kontrollieren einer ordnungsgemässen Einbettung vereinfacht ist. Eine Fase hilft beispielsweise bei der Kontrolle, indem optisch einfach festgestellt werden kann, ob Haltemasse von der Flachseite mit dem oder den Bauteilen aus durch den Freiraum hindurch bis zur gegenüberliegenden Seite des Trägers vorgedrungen ist. Die Haltemasse kann den angefasten Bereich des Freiraums zumindest abschnittsweise überragen und sogar überfliessen.

Gemäss einer weiteren Ausführungsform wird in einem Urformschritt ein Grünkörper zur Herstellung des Keramikteils spritzgegossen. Wie bereits eingangs erwähnt kann ein erfindungsgemässes Verfahren insbesondere beim Spritzguss von Vorteil sein, weil Kavitäten so ausgestaltet sein können, dass sie über den Träger bzw. Tragabschnitt möglichst gleichmässig füllbar sind. Insbesondere in Multikavitätenspritzguss standardisierter und/oder miniaturisierter Keramikbauteilgrünlinge ist somit möglich. Der Träger bzw. Tragabschnitt kann beim Spritzguss vorteilhaft zum Abstützen von Auswurfeinrichtungen bzw. Stiften beim Entformen des spritzgegossenen Grünlings genutzt werden.

Gemäss einer weiteren Ausführungsform weist eine Anspritzbasis des Keramikbauteils zumindest in einem Übergangsabschnitt zum Träger oder Tragabschnitt eine Anspritzquerschnittsfläche auf, die mindestens so gross ist, wie eine maximale Bauteilquerschnittsfläche des Keramikbauteils. Somit kann die Kavität des Keramikbauteils mit einer hohen Geschwindigkeit bei moderatem Druck sehr gleichmässig vollständig gefüllt werden.

Gemäss einer weiteren Ausführungsform verläuft eine Längsachse des Keramikbauteils im Wesentlichen parallel zu einer Flächennormalen der Anspritzquerschnittsfläche und/oder der Bauteilquerschnittsfläche. Bei der Längsachse kann es sich um eine Rotations- bzw. Mittelachse des Keramikbauteils, beispielsweise eines Zahnrades, handeln. Die Kavität für den Keramikbauteilgrünling lässt sich somit axial befüllen, was insbesondere von Vorteil ist, wenn eine Vielzahl von auf einem Träger bzw. Tragabschnitt angeordnete Keramikbauteilgrünlinge möglichst gleichzeitig auszuformen ist.

Gemäss einer weiteren Ausführungsform verjüngt das Keramikbauteil sich zumindest abschnittsweise entlang seiner Längsachse in Richtung von der Anspritzquerschnittsfläche und/oder der Bauteilquerschnittsfläche weg. Somit kann der Keramikbauteilgrünling möglichst einfach und unbeschadet axial entformt werden. Durch die Verjüngung kann die Anspritzquerschnittsfläche einer maximalen Bauteilquerschnittsfläche oder zumindest einer maximalen Grünlingsquerschnittsfläche des Keramikbauteils entsprechen.

Gemäss einer weiteren Ausführungsform wird nach dem Urformschritt und vor dem Sintern ein sekundärer Formgebungsschritt und/oder Oberflächenbearbeitungsschritt am Grünkörper und/oder an einem aus dem Grünkörper gewonnenen Braunkörper durchgeführt. Dabei kann der Träger bzw. Tragabschnitt vorteilhafter Weise zum Halten des oder der Bauteile verwendet werden. Eine zumindest abschnittsweise Abdeckung des Bauteils durch den Träger bzw. Tragabschnitt kann beispielsweise dazu genutzt werden, die Oberfläche des Bauteils selektiv bzw. ausschliesslich in den nicht abgedeckten Bereichen zu bearbeiten. Eine Vielzahl von am Träger bzw. Tragabschnitt gehaltenen Bauteilen können vorteilhafter Weise gemeinsam dem sekundären Formgebungsschritt und/oder Oberflächenbearbeitungsschritt unterzogen werden.

Eine Vorrichtung zur Ausführung der Erfindung kann so ausgestaltet sein, dass in einer erfin Spritzgussform bzw. deren Kavität ein Abschnitt zur Ausformung des Trägers bzw. Tragabschnittes vorgesehen ist, der mit wenigstens einer Kavität für ein Keramikbauteil in Verbindung steht. Eine Gesamtkavität einer Spritzgussform ist komplementär zu einem Keramikteil samt Träger bzw. Tragabschnitt und Keramikbauteil ausgeformt. Ein Keramikbauteil ist insbesondere mit wenigstens einem Träger bzw. Tragabschnitt verbunden, der bei der weiteren Verarbeitung vom Keramikbauteil zu entfernen ist. Dabei können eine Vielzahl von Keramikbauteilen auf dem Träger bzw. Tragabschnitt angeordnet sein.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands.
- Figur 1: zeigt schematisch die einzelnen Schritte eines Herstellungsverfahrens für Keramikteile.
- Figur 2: zeigt ein erstes Ausführungsbeispiel eines Keramikteils mit Keramikbauteilen und Träger bzw. Tragabschnitt in einer schematischen Perspektivansicht.
- Figur 3: zeigt ein Detail D aus Figur 2.
- Figur 4: zeigt das in Figur 2 und 3 dargestellte Keramikteil in einer weiteren schematischen Perspektivansicht.
- Figur 5: zeigt das in Figur 2 bis 4 dargestellte Keramikteil in einer schematischen Vorderansicht.
- Figur 6: zeigt eine schematische Querschnittsansicht des in Figur 2 bis 5 dargestellten Keramikteils entlang einer in Figur 5 eingezeichneten Schnittlinie E-E.
- Figur 7: zeigt ein weiteres Ausführungsbeispiel eines Keramikteils mit einem Keramikbauteil und Träger bzw. Tragabschnitt in einer schematischen Perspektivansicht.
- Figur 8: zeigt das in Figur 7 dargestellte Keramikteil in einer schematischen Vorderansicht.
- Figur 9: zeigt eine schematische Querschnittsansicht des in Figur 7 und 8 dargestellten Keramikteils entlang einer in Figur 5 eingezeichneten Schnittlinie F-F.
- Figur 10: zeigt ein Detail G aus Figur 9.
- Figur 11: zeigt das in Figur 7 bis 10 dargestellte Keramikteil nach dem Entfernen des Trägers bzw. Tragabschnittes in einer schematischen Perspektivansicht.
- Figur 12: zeigt ein Detail H aus Figur 11.

### Ausführung der Erfindung

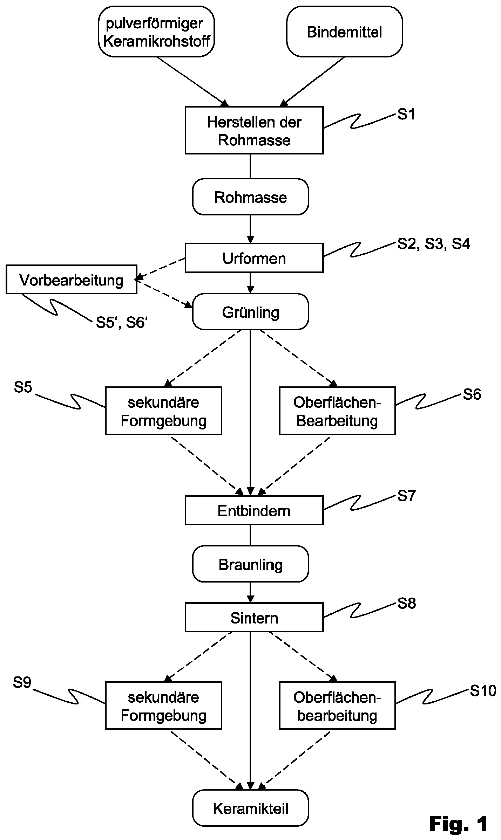

Ein vorteilhaftes Herstellungsverfahren für technische Keramikteile ist in Figur 1 dargestellt. In einem ersten Schritt S1 wird eine spritzgussfähige Rohmasse hergestellt, indem ein pulverförmiges keramisches Ausgangsmaterial mit einem geeigneten thermoplastischen polymeren Bindermaterial vermischt wird.

In einem Urform-Schritt S2, S3 und/oder S4 wird mit geeigneten Spritzguss-, 3D-Druck- bzw. Extrusionswerkzeugen die erhitzte Rohmasse in die gewünschte Form gebracht. Nach dem Abkühlen bzw. Entformen erhält man den sogenannten Grünling, die erste Stufe für den nachfolgenden Herstellungsprozess des Keramikteiles. Der Grünling entspricht in der Form im Wesentlichen dem zukünftigen Keramikteil, während die Dimensionen grösser sind, um die Schrumpfung während des Sinterns auszugleichen.

In einem dritten Schritt S7 wird bei der sog. Entbinderung mit geeigneten Verfahren aus dem Grünling ein Grossteil der Bindermaterial-Matrix entfernt. Der resultierende sog. Braunling besteht im Wesentlichen nur noch aus dem pulverförmigen Keramikausgangsmaterial, welches durch eine kleine verbleibende Menge an Bindermaterial in der Form gehalten wird.

In einem vierten Schritt S8 wird schliesslich der Braunling bei hohen Temperaturen gesintert. Der verbleibende Rest an Bindermaterial wird dabei pyrolisiert. Die für die Sinterung gewählte Temperatur verbleibt unterhalb der Schmelztemperatur der Keramik. Das thermodynamische Gesamtsystem verringert seine freie Enthalpie, indem keramisches Material lokal diffundiert und die einzelnen Partikel an den Berührungsstellen zusammenwachsen, was die Grenzflächenenergie senkt. Nach dem Abkühlen resultiert das fertig gesinterte Keramikteil.

### S1: Herstellung der Rohmasse

In einem erfindungsgemässen Herstellungsverfahren für Keramikteile wird in einem ersten Schritt S1 eine spritzgussfähige Rohmasse bereitgestellt. Als Keramikrohmaterial dient dabei pulverförmiges tetragonales Zirkonium(IV)oxid bzw. Zirkoniumdioxid (ZrO₂, nachfolgend einfach Zirkonoxid). Die tetragonale Kristallphase wird vorteilhaft durch Dotierung mit einigen mol% Yttrium(III)oxid (Y₂O₃) stabilisiert, beispielsweise 3-8 mol%. Die Zugabe von 3 Mol% Y2O3 führt zu einer metastabilen tetragonalen Phase. Bei sehr hoher mechanischer Belastung entstehen lokale Spannungsspitzen, die zur Bildung von Mikrorissen führen können. Das Spannungsfeld an der Rissspitze erzeugt die Umwandlung von der tetragonalen zur monoklinen Phase. Durch die dabei entstehende Volumenzunahme werden die Risse verdichtet und der Rissfortschritt ist gebremst. Häufig wird auch eine kleine Menge 0,2-0,3 % Aluminiumoxid zugegeben, was zusätzlich nochmals eine Erhöhung der mechanischen Eigenschaften bewirkt. Die mittlere Korngrösse beträgt beispielsweise ca. 300 nm und sollte sich insbesondere bei Zirkonoxid zwischen 250 und 350nm bewegen bzw. möglichst homogen sein, da sonst Festigkeitsprobleme auftreten können.

Zirkonoxid weist eine hohe Härte in Kombination mit hoher Elastizität und hoher Biegebruchfestigkeit auf. Dieses keramische Material ist deshalb sehr gut geeignet beispielsweise für bewegliche Bauteile, die unter hohen Belastungen während langer Zeit wartungsfrei und präzise funktionieren sollen, beispielsweise Zahnräder in miniaturisierten Getrieben. Auch für medizinische Implantate, wie beispielsweise Zahnimplantate, welche mit dem Knochengewebe verwachsen sollen, ist Zirkonoxid aufgrund seiner sehr guten Biokompatibilität ein sehr vorteilhaftes Material.

Als thermoplastisches Bindermaterial wird homopolymeres Polyoxymethylen (POM-H) verwendet. Da für die spätere Verwendung die bei POM übliche Säurestabilisation nicht vorteilhaft ist, wird auf eine Veretherung bzw. Veresterung der Polymer-Endguppen verzichtet. Der Schmelzpunkt von POM-H beträgt ca. 175-178 °C.

Das pulverförmige Zirkonoxid wird mit geeigneten Geräten mit dem thermoplastischen Binderpolymer homogen gemischt, so dass eine granulatförmige Rohmasse entsteht, die beispielsweise unter dem Produktnamen Catamold^{®} von der Firma BASF vertrieben wird. Zu Herstellung der Rohmasse werden die Bestandteile unter Wärmeeinwirkung in Kneteranlagen homogen vermischt und anschliessend weiter homogenisiert. Entsprechende Technologien sind dem Fachmann aus der Herstellung von mit Füllstoffen beladenen Spritzgussrohpolymeren bekannt. Am Ende des Prozesses resultiert ein ThermoplastGranulat, wie es üblicherweise beim Spritzgiessen oder Extrudieren als Ausgangsmaterial verwendet wird, oder Thermoplast-Filamente, wie sie üblicherweise beim 3D-Druck verwendet werden.

### S2: Spritzgiessen

Das Rohgranulat wird anschliessend in einem nächsten Schritt S2 als Urformschritt mit geeigneten Thermoplast-Spritzgussmaschinen verarbeitet, in der das Bindermaterial aufgeschmolzen wird. Die nun wieder plastische, homogene Rohmasse wird unter hohem Druck (mehrere hundert bar) in entsprechende Spritzgusswerkzeuge gespritzt, wo die Masse in der gewünschten Form erstarrt. Sämtliche Teile der Spritzgusseinheit, die mit der Spritzgussmasse in Berührung kommen, wie z.B. Schnecke, Zylinder, Düse und Rückstromsperre, sind an die aufgrund der enthaltenen Keramikpartikel relativ hohe Abrasivität der Spritzgussmasse anzupassen. Dazu können diese Teile beispielsweise pulvermetallurgisch behandelt sein, um widerstandsfähige Hartmetalloberflächen aufzuweisen.

Nach dem Entformen und Auskühlen der Spritzgussteile können diese direkt als Grünlinge im Entbinderungsschritt S7 weiterverarbeitet werden, oder einer üblichen Nachbearbeitung unterzogen werden, beispielsweise der Entfernung des Angusses. Analog zu Kunststoffteilen kann der Anguss aufgearbeitet und ein weiteres Mal verwendet werden.

Es ist jedoch in einer alternativen Variante des erfindungsgemässen Verfahrens auch möglich, die Grünlinge einem weiteren formgebenden Schritt S5 zu unterziehen, beispielsweise Fräsen, Bohren, Schleifen oder Drehen.

Alternativ oder zusätzlich kann auch die Oberfläche des Grünlings bearbeitet werden. Ein solcher optionaler Arbeitsschritt S6 wird weiter unten noch beschrieben.

Als weitere Alternative oder zusätzliche Möglichkeit kann in wenigstens einem Vorbearbeitungsschritt S5' und/oder S6' die Form bzw. Oberfläche eines Körpers im Grünzustand noch während, beispielsweise zum Abschluss oder direkt nach dem Urformschritt S2, S2, S4 beeinflusst werden. So ist denkbar, im Vorbearbeitungsschritt S5', S6' die Form eines im Spritzguss S2 erzeugten Grünkörpers in seiner Spritzgussform zu beeinflussen, indem beispielsweise durch sog. "In-mold-closing" verschiedene Grünkörperabschnitte vor dem Auswurf aus dem Werkzeug zu einem Grünkörper zusammengeführt werden. Im Rahmen eines 3D-Druck-Schrittes S3 kann innerhalb eines Vorbearbeitungsschritts S5', S6' ein Abschnitt an einen Grünkörper angeformt oder verschiedene Grünkörper miteinander verbunden werden, der durch ein anderes Urformverfahren erzeugt wurden. Ein durch Extrusion gewonnener Grünkörperstrang bzw. ein Grünkörperprofil kann beim Vorberarbeitungsschritt S5', S6' zum Beispiel vereinzelt werden. Generell kann die Oberfläche während des wenigstens einen Vorbearbeitungschrittes S5', S6' beliebig verändert bzw. bearbeitet werden.

### S7: Entbinderung

Bei dem Verfahren beruht die Entbinderung auf einem kontrollierten, säuregestarteten katalytischen Abbau des Bindermaterials POM-H in einem Temperaturbereich zwischen 90 bis 120 °C, bevorzugt bei 110°C, wenn das schon oben erwähnte Catamold^{®} verwendet wird. Zirkonoxid hingegen ist gegenüber den meisten Säuren stabil. Beim Entbinderungsprozess werden die Polymerketten von den Enden her depolymerisiert und zu gasförmigem Formaldehyd abgebaut. Die vorteilhaft ebenfalls gasförmige Säure wirkt dabei von der Oberfläche des Grünlings her und diffundiert durch die offene poröse Struktur, die durch den Abbau der Binderpolymer-Matrix allmählich entsteht, ins Innere. Die beim säuregestartetem katalytischen Abbau entstehenden gasförmigen Formaldehyd-Monomere wiederum diffundieren durch die poröse Struktur nach aussen.

Der Entbinderungsprozess erfolgt somit kontinuierlich von aussen nach innen mit einer von der beigegebenen Säuremenge abhängigen Geschwindigkeit von ca. 0.1 bis 0.8 mm/h, insbesondere von 0.4 bis 0.6 mm/h. Eine Erhöhung der Säuremenge beschleunigt zwar den Entbinderungsprozess, der dadurch jedoch ungleichmässig werden kann, was wiederum problematisch sein kann.

Die Entbinderung wird, abhängig von der Dimensionierung der zu entbindernden Teile, so lange durchgeführt, bis die Bindermatrix über das gesamte Volumen des Werkteils soweit abgebaut ist, dass nur noch ein geringer Rest verbleibt (beispielsweise 0.3 - 0.5 Gew.% der ursprünglichen Bindermatrix). Es resultiert der im Wesentlichen nur noch aus Zirkonoxid-Partikeln bestehende Braunling. Der verbleibende kleine Rest der Bindermatrix von ca. 0.3 - 0.5 % dient der mechanischen Stabilisierung des Bräunlings. Die restliche Bindermatrix wird im darauffolgenden Schritt der Sinterung S8 schon bei wenigen hundert °C beim Erwärmen des Bräunlings auf Sintertemperatur vollständig pyrolisiert.

Die Entbinderung erfolgt bei erhöhter Temperatur und Normaldruck unter Verwendung von Salpetersäure als den Entbinderungsprozess startende Säure. Die Grünlinge werden in einen geeigneten Ofen transferiert und auf die vorgesehen Temperatur erhitzt. Bei einem erfindungsgemässen Verfahren liegt dabei die Temperatur in einem Bereich von 90 bis 110 °C und besonders vorteilhaft bei 110 °C.

Nach dem Erreichen der Prozesstemperatur wird eine gewisse Menge an Salpetersäure in den Ofen gegeben, die bei diesen Temperaturen in den dampfförmigen Zustand übergeht. Die Verweildauer hängt von der Geometrie der Werkteile ab.

Vorteilhaft wird aus dem Ofen austretendes Gas einer Reinigung zugeführt, um Salpetersäure und Formaldehyd aufzufangen. Entsprechende Technologien sind dem Fachmann bekannt, beispielsweise durch Abfackeln zu CO₂ und H₂O oder durch Auskondensation und Gaswäsche.

Nach dem Entbindern werden die Braunlinge abgekühlt und für die nachfolgende Sinterung zwischengelagert.

### S8: Sinterung

Bei der Sinterung verbacken die einzelnen Partikeloberflächen des Keramikmaterials miteinander. In einem ersten Stadium lagern sich die einzelnen Partikel um und durch Materialdiffusion erhöht sich die Kontaktfläche, was die Grenzflächenenergie erniedrigt. In einem zweiten Stadium wachsen die einzelnen Partikel weiter zusammen und bilden sog. Hälse. Es bilden sich Korngrenzen. Im dritten Stadium wachsen die Körner, und das Porenkanalsystem wird reduziert. Während der Sinterung schrumpft das Werkstück und die Dichte steigt.

Die Sinterung von Zirkonoxid erfolgt in einem geeigneten Sinterofen, bei Temperaturen weit unterhalb der Phasenübergangstemperatur von der tetragonalen Kristallphase in die kubische Kristallphase (2370 °C bei reinem Zirkonoxid), und damit natürlich auch unterhalb der Schmelztemperatur (2690 °C). Bei einem erfindungsgemässen Verfahren liegt die Sintertemperatur in einem Bereich von 1350 bis 1550 °C, und vorteilhaft in einem Bereich von 1400 bis 1480 °C, insbesondere bei 1450 °C. Für ein möglichst feines Gefüge des Keramikmaterials werden eher niedrige Sintertemperaturen im unteren Bereich der genannten Temperaturspanne gewählt. Sintertemperaturen im oberen Bereich der Temperaturspanne erhöhen hingegen die Dichte und Korngrösse des Keramikmaterials, wodurch dessen Elastizität und Festigkeit abnehmen.

Der gesamte Sintervorgang dauert bei Zirkonoxid in Abhängigkeit von gewählter Temperatur und Bauteilgrösse ca. 24 bis 36 Stunden. Nach der Sinterung werden die Keramikteile langsam abgekühlt. Sie sind dann in ihrer Urform erstellt, mechanisch fest und ihre Oberfläche ist geschlossen. Durch den Sinterungsprozess unterliegen die Teile im Vergleich zum Grünling einer Schwindung von linear ca. 22% mit einem Toleranzbereich von ±0.3%. Die Schwindung beruht darauf, dass die nach Auslösen des Binders im Braunling vorhandenen Hohlräume zusammenschrumpfen.

In einer besonders vorteilhaften Variante eines erfindungsgemässen Verfahrens werden der Entbinderungsschritt und der Sinterungsschritt im gleichen Ofen durchgeführt, ohne dass dazwischen der Braunling abgekühlt, zwischengelagert und wieder erhitzt werden muss. Neben der dadurch resultierenden Energieersparnis und Reduktion des Arbeitsaufwands hat ein solches Vorgehen den Vorteil, dass mechanische Belastungen des Werkteils beim Abkühlen und Aufwärmen vermieden werden, und die sehr empfindlichen Braunlinge nicht durch fehlerhafte Behandlung beschädigt werden können.

Ein weiterer Vorteil liegt darin, dass ein solcher Ofen derart gebaut werden kann, dass er alle Schritte vom Grünling bis zum fertig gesinterten Keramikteil automatisch durchführen kann. Ein derartiger Ofen mit vergleichsweise kleinem Ladevolumen kann beispielsweise in einer Werkstatt zur Herstellung von Implantaten eingesetzt werden.

Es ist jedoch in einer alternativen Variante des erfindungsgemässen Verfahrens auch möglich, die Keramikteile nach dem Schritt S8 des Sinterns einem zusätzlichen formgebenden Schritt S9 zu unterziehen, beispielsweise Fräsen, Bohren, Schleifen oder Drehen.

Alternativ oder zusätzlich kann auch die Oberfläche der Keramikteile bearbeitet werden. Ein solcher optionaler Arbeitsschritt S10 wird weiter unten noch beschrieben.

### S3: 3D-Druck als formgebendes Verfahren

In einer weiteren vorteilhaften Variante eines erfindungsgemässen Verfahrens wird als Urformschritt, also als grundlegender formgebender Schritt zur Herstellung des Grünlings, anstatt des Spritzgussverfahrens S2 ein dreidimensionales Druckverfahren (3D-Druck) S3 eingesetzt.

In der Anmeldung der Anmelderin mit dem Titel "Freiform-Keramikbauteile", die am gleichen Tag wie diese Anmeldung angemeldet worden ist und deren Offenbarungsgehalt hiermit in seiner Gesamtheit durch Referenz in die Beschreibung mit aufgenommen wird, wird ein solches vorteilhaftes Verfahren zur Herstellung von Grünlingen offenbart.

Mit einem geeigneten 3D-Druckersystem werden die Grünlinge additiv aus der thermoplastischen Rohmasse aufgebaut. Die Rohmasse besteht neben dem pulverförmigen, yttriumstabilisierten Zirkonoxid vorteilhaft wiederum aus POM-H als thermoplastischem Binderpolymer. Das thermoplastische Rohmaterial kann mit einem geeigneten Druckkopf, beispielsweise in Form einer Düse, punkt- oder streifenweise in flüssiger oder plastischer Form auf den im Aufbau befindlichen Grünling appliziert werden (sog. Fused Deposition Modelling). Um bei auskragenden Formen die notwendigen Stützstrukturen aufzubauen, kann ein zweites Material verwendet werden, beispielsweise ein in Lösungsmitteln leicht lösliches Polymer, dass anschliessend an den 3D-Druck des Grünlings aufgelöst werden kann, so dass nur das Materials des Grünlings verbleibt. Alternativ kann auch Bindermaterial ohne Zirkonoxid verwendet werden, welches bei der Entbinderung des Grünlings restlos abgebaut bzw. entfernt wird.

Alternativ kann das Rohmaterial als feines, rieselfähiges Pulver bereitgestellt und schichtweise durch Laserlicht aufgeschmolzen werden (sog. selektives Laserschmelzen), oder gesintert (sog. selektives Lasersintern), wobei sich hier der Begriff "Sintern" auf die Thermoplastpartikel bezieht, und nicht etwas auf das nachfolgende Sintern der Vielzahl an Keramikpartikeln innerhalb der Thermoplastpartikel. Um die Schmelztemperatur zu senken, kann die Kettenlänge des POM-H Polymers kürzer gewählt werden als bei einer Rohmasse für ein Spritzgussverfahren.

Der Vorteil von 3D-Druck bei der Anfertigung von Grünlingen liegt bei der Fertigung von Einzelteilen oder Kleinserien. Insbesondere lassen sich auf diese Weise aufgrund spezifischer 3D-Daten grössere Keramik-Implantate anfertigen, beispielsweise für die rekonstruktive Gesichtschirurgie.

Die auf diese Weise angefertigten Grünlinge können direkt mit den Schritten S7 (Entbinderung) und S8 (Sinterung) zum fertigen Keramikteil weiterverarbeitet werden. Alternativ kann vor der Entbinderung noch ein sekundärer Formgebungsschritt S5 erfolgen, und/oder eine Oberflächenbehandlung S6.

### S4: Extrusion als formgebendes Verfahren

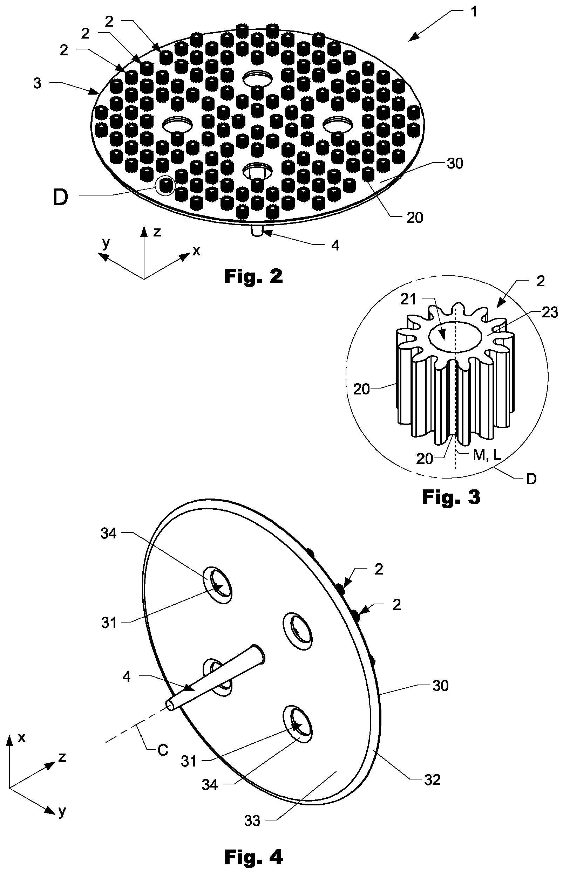

In einer weiteren vorteilhaften Variante eines erfindungsgemässen Verfahrens wird als Urformschritt zur Herstellung des Grünlings anstatt des Spritzgussverfahrens S2 oder des dreidimensionalen Druckverfahren S3 ein Extrusionsverfahren S4 eingesetzt. Der entsprechende Herstellungsprozess ist schematisch in Figur 3 dargestellt.

Ein Vorteil der Extrusion bei der Anfertigung von Grünlingen liegt bei der Fertigung von Kleinserien mit Stückzahlen, für die einerseits zu gering sind, als dass sich die Herstellung eines Spritzgusswerkzeugs lohnen würde, und die andererseits zu gross für die wirtschaftliche Anwendung eines 3D-Druckverfahrens sind. Insbesondere lassen sich durch Extrusion kleine gleichförmige Bauteile, wie beispielsweise Zahnräder oder Achsen, anfertigen.

### S5: Sekundäre Formgebung des Grünlings

Die Form des Grünlings kann den jeweiligen Anforderungen gemäss zumindest abschnittsweise beim und/oder nach dem Ent- bzw. Ausformen im Rahmen wenigstens eines sekundären Formgebungsschrittes S5 manipuliert werden.

Die Manipulation kann insbesondere erforderlich sein, wenn der Grünling durch Schwindungsprozesse beim Abkühlen einen Verzug aufweist. Dies kann beispielsweise der Fall sein, wenn der Grünling ein Vielzahl von auf einem Träger bzw. einer Trägerplatte angeordneten Bauteilen umfasst. Wenn die Bauteile entlang einer Längsseite des Trägers oder auf einer Flachseite der Trägerplatte angeordnet sind, so kann es erforderlich sein, einen Verzug des Trägers bzw. der Trägerplatte auszugleichen.

Der Ausgleich kann durch Zerspanen, beispielsweise Planschleifen der Bauteile, erfolgen. Um den Ausgleich zu erzielen können Abschnitte des Bauteile und/oder des Trägers abgenommen werden. Je nach Anforderung ist insbesondere bei relativ kleinen Bauteilen die Zerspanung sehr präzise, beispielsweise in Bereichen von 2 bis 10 µm maximalen Materialabtrags durchzuführen.

Des Weiteren kann die Manipulation erforderlich sein, wenn der Grünling durch Extrusion geformt ist. So wird bei der Extrusion in der Regel ein Grünkörperstrang bzw. -profil geformt, das eine Vielzahl noch zu vereinzelnder Bauteile im Grünzustand umfasst. Die Vereinzelung kann beispielsweise durch ein regelmässiges Abtrennen extrudierter Grünkörper aus dem Strang bzw. Profil erfolgen.

Da durch Extrusion in der Regel nur Stränge und Profile mit konstantem Querschnitt geformt werden können, sind jegliche an extrudierten Grünkörpern gewünschte Querschnittsveränderungen nachträglich anzubringen. So können am Grünling insbesondere jegliche Art von Vertiefungen, wie beispielsweise Kerben oder Nuten, entlang dessen Aussenumfang angebraucht werden.

Die Vertiefungen können zum einen durch Zerspanen ausgeformt werden. Zum anderen können die Vertiefungen aufgrund der thermoplastischen Eigenschaften des Grünlings mit Hilfe von Umform-Werkzeugen erzeugt werden, die in die Oberfläche des Grünlings eindringen. Beispielsweise kann ein Eindrücken der Oberfläche erfolgen, solange der Grünling nach dem Extrudieren noch nicht vollständig erkaltet ist, oder das Eindrücken erfolgt am erkalteten Grünkörper mittels eines erwärmten Werkzeugs, beispielsweise eines Stempels.

Zwar wäre als weitere Alternative eine sekundäre Formgebung am Braunling möglich. Jedoch ist der Braunling im Vergleich zum Grünling oder gesinterten Keramikteil relativ Spröde und zerbrechlich. Der Braunling ist nämlich, wie schon erwähnt, im Wesentlichen nur durch den Verbleibenden Binder zusammengehalten und weist eine vergleichsweise offenporige Struktur auf. Dies erschwert die Bearbeitung des Bräunlings.

Um hier Abhilfe zu schaffen kann der Braunling zumindest oberflächlich in ein Füllmaterial, beispielsweise ein flüssiges thermoplastisches Polymer getaucht werden. Das erstarrte Polymer würde zumindest oberflächig die Poren des Braunlings füllen und diesen somit stabilisieren, was dessen sekundäre Formgebung, beispielsweise durch Einspannen sowie Zerspanen vereinfacht. Nach der sekundären Formgebung kann das Füllmaterial in einem weiteren Entbinderungsschritt und/oder beim Sintern pyrolisiert werden. Allerdings ist das Porenverfüllen mit einem gewissen Zeitaufwand verbunden, der sich nachteilig auf den Produktionsablauf bzw. die Produktionsgeschwindigkeit auswirken kann.

### S6: Oberflächen-Bearbeitung des Grünlings

Vorteilhaft wird die Erhöhung der Oberflächenrauhigkeit bereits beim Grünling vorgenommen, da dieser einfacher zu bearbeiten ist. In einer vorteilhaften Variante wird die Oberfläche des Grünlings sandgestrahlt. Da der Grünling eine wesentlich geringere Härte aufweist als das gesinterte Keramikteil, dauert dieser Prozess wesentlich kürzer als beim gesinterten Keramikteil.

In einer anderen vorteilhaften Variante wird die Oberfläche des Grünlings mit einer Vielzahl von eng fokussierten Laserpulsen bestrahlt, um die Oberfläche punktförmig aufzuschmelzen oder vorzugsweise zu verdampfen und so die gewünschte Rauhigkeit zu erreichen.

In einer weiteren Ausführungsform werden feine Keramikpartikel der gleichen Art wie die in der Rohmasse, also beispielsweise Zirkonoxid-Partikel, mit geeigneten Verfahren mit einer sehr dünnen Schicht Bindermaterial überzogen. Der Grünling kann nun mit diesen Partikeln beschichtet werden. Beispielsweise können die Grünlinge mit Heissluft oder Infrarot kurzfristig an der Oberfläche soweit erwärmt und die thermoplastische Matrix angeschmolzen werden, dass die binderbeschichteten Partikel daran kleben bleiben, wenn der erwärmte Grünling in eine Kammer mit verwirbeltem Partikelstaub gebracht wird, oder komplett oder zumindest gezielt abschnittsweise in ein Bad von entsprechendem Partikelstaub getaucht wird. Ein derart beschichtetes Keramikteil kann nun mit den bereits beschriebenen Entbinderungsverfahren und Sinterungsverfahren weiter verarbeitet werden. Die anhaftenden Keramikpartikel verbinden sich beim Sintern mit dem Keramikkörper, was zu einer erhöhten Oberflächenrauhigkeit führt.

Alternativ oder zusätzlich kann die Oberfläche des Grünlings zumindest abschnittsweise geglättet werden. Beispielsweise lassen sich so Unebenheiten auf der Oberfläche des Grünlings beseitigen, die sich aus dem jeweiligen formgebenden Verfahren ergeben können. Derartige Unebenheiten können insbesondere beim 3D-Druck-Verfahren im den Übergängen zwischen den einzelnen gedruckten Schichten entstehen. Um die Unebenheiten zu beseitigen kann beispielsweise ein Gasstoffstrom auf die Oberfläche des (noch thermoplastischen) Grünlings gerichtet werden. Auch kann die Oberfläche des Grünlings geschliffen werden.

Als weitere alternative oder zusätzliche Möglichkeit können in den Grünling bzw. einen daraus erzeugten Braunling Additive eingebracht werden, die Transportsubstanzen sowie in diesen aufgenommene Zusatzmaterialien umfassen können.

### S9: Sekundäre Formgebung des Keramikteils

Die nach den oben genannten erfindungsgemässen Verfahren hergestellten Keramikteile können anschliessend weiter nachbearbeitet werden, beispielsweise mittels verschiedener Schleif- und Polierverfahren, Schneidverfahren, Sandstrahlen, Bearbeitung mittels Laser und Glasieren. Ebenfalls möglich sind Nachbearbeitungsverfahren, welche die strukturellen Eigenschaften der Keramik weiter verbessern, beispielsweise Heisspressen oder heiss-isostatisches Pressen. Beim heiss-isostatischen Pressen, dem sogenannten "HiPen", werden Keramikteile bei einem Druck von 2000 bis 3000 bar und annähernd Sintertemperatur an der Oberfläche nachverdichtet. Somit kann die Bruchfestigkeit des Keramikteils um bis zu 25% auf ca. 1300 MPa gesteigert werden.

In einem Verfahren, das weiter unten unter Bezug auf die Figuren 2 bis 12 anhand entsprechender Ausführungsbeispiele im Detail beschrieben ist, wird in einem ersten Schritt das Keramikteil in eine Haltemasse zumindest abschnittsweise eingegossen oder eingetaucht- bzw. gedrückt. In einem zweiten Schritt wird ein Teil des Keramikteils zerspant. Die Haltemasse erlaubt es dabei, auch sehr fein strukturierte Keramikteile zu bearbeiten. Die Haltemasse schützt das Keramikteil vor mechanischen Beschädigungen und erlaubt das einfache Einspannen in Haltevorrichtung der Zerspanungsmaschine. In einem dritten Schritt wird die Haltemasse wieder entfernt, beispielsweise durch Auflösen der Haltemasse.

Vorteilhaft wird als Haltemasse ein lösliches Polymer, beispielsweise ein Harz, ein Zucker und/oder dessen oxidierte und kondensierte Reaktionsprodukte, verwendet. Das zu bearbeitende Keramikteil wird beispielsweise in die geschmolzene Haltemasse eingegossen oder in eine Haltemasseschicht eingedrückt. Der resultierende Block bzw. Verbund wird für den Zerspanungsvorgang in eine Halterung eingespannt. Nach dem Fräsvorgang wird die Haltemasse bzw. deren Polymermatrix mit geeigneten Lösungsmitteln aufgelöst, beispielsweise mit Wasser und/oder Alkohol bzw. Ethanol, einem Aceton-Wasser-Gemisch, einer wässrigen Borax- oder Ammoniaklösung, usw.

Vorteilhaft wird als Haltemasse ein natürliches Material verwendet, das biologisch abbaubar und physiologisch unbedenklich ist. Neben dem oben genannten Zucker kann als natürliches Harz beispielsweise gereinigter Gummilack verwendet werden. Dieser kann durch ebenfalls unproblematische Lösungsmittel wie Ethanol oder Borax-Lösung gelöst werden und ist mehrfach verwendbar. Alternativ kann auch mit Borax präalkalisierter gereinigter Gummilack verwendet werden, der direkt wasserlöslich ist.

Bei einer ersten Verfahrensvariante wird ein gemeinsames erweitertes Angussstück in Form eines Trägers bzw. einer Trägerplatte mit einer Mehrzahl von beispielsweise identischen Kleinteilen durch Zerspanen bspw. Schleifen entfernt, so dass schliesslich die vereinzelten Keramikkleinteile resultieren, beispielsweise Keramikzahnräder mit Durchmessern von wenigen Millimetern. Das erweitere Angussstück, welches beispielsweise die Form einer Platte haben kann, erlaubt zum einen beim Spritzgiessen einen homogenen Materialfluss über das gesamten Volumen des späteren Keramikkleinteils, und daraus resultierend entsprechend homogene Materialeigenschaften. Zum anderen werden mechanische Beschädigungen des Grünlings beim Entformen vermieden. Ebenfalls ist das Handling während der nachfolgenden Herstellungsschritte stark vereinfacht.

In einer anderen Verfahrensvariante wird flächig ein Teil eines im Wesentlichen plattenförmigen Keramikteils zerspant. Die Keramikplatte weist auf der einen Seite der Platte Ausnehmungen oder Vertiefungen auf, wie beispielsweise Sacklöcher oder Schlitze, welche beim flächigen Wegfräsen des Materials auf der anderen Seite der Platte angeschnitten werden. Es resultiert ein Keramikteil mit durchgehenden Löchern oder Schlitzen, die nicht direkt durch entsprechendes Spritzgiessen des Grünlings zu fertigen wären und die ansonsten nur sehr aufwendig durch nachträgliches Bearbeiten einer Keramikplatte mit Bohren oder Schlitzfräsen hergestellt werden könnten.

### S10: Oberflächen-Bearbeitung des Keramik-Teils

Die Oberfläche des gesinterten Keramikteils ergibt sich im Wesentlichen aus den Eigenschaften der Oberfläche des Grünlings bzw. Braunlings. Mit Spritzguss hergestellte Oberflächen sind vergleichsweise glatt. Für gewisse Anwendungen kann es jedoch vorteilhaft sein, die Oberflächenrauhigkeit des Keramikteils zu erhöhen, beispielsweise bei Implantaten, um das stabile Zusammenwachsen mit Knochengewebe zu erleichtern. Üblicherweise wird dazu die Oberfläche des gesinterten Keramikteils durch Sandstrahlen und/oder Ätzen aufgeraut. Zum Ätzen kann beispielsweise Flusssäure verwendet werden. Alternativ oder zusätzlich kann die Oberfläche des Keramikteils geglättet werden.

### Keramikteile

Figur 2 zeigt ein Keramikteil 1 in einer schematischen Perspektivansicht. Das Keramikteil 1 erstreckt sich entlang einer Längsrichtung X, einer Querrichtung Y und einer Höhenrichtung Z, die gemeinsam ein kartesisches Koordinatensystem aufspannen. In seiner in Figur 1 dargestellten Form kann das Keramikteil 1 im Grünzustand, Braunzustand oder im gesinterten Zustand vor der weiteren Verarbeitung vorliegen.

Das Keramik Teil 1 umfasst eine Vielzahl von Keramikbauteilen 2, die auf einen Träger bzw. Tragabschnitt 3 angeordnet sowie damit verbunden sind. Des Weiteren umfasst das Keramikteil einen Anguss 4, der mit dem Träger 3 verbunden ist. Die Keramikbauteile 2 weisen eine Stirnseite 20 auf, die zu einer Flachseite 30 des Trägers 3 hin gewannt ist und in einer durch die Längsrichtung X und Querrichtung Y aufgespannt Querschnittsebene einer Anspritzquerschnittsfläche der Keramikbauteile 2 entspricht, die im vorliegenden Fall gleichzeitig ihre Bauteilquerschnittsfläche darstellt.

Figur 3 zeigt ein Detail D aus Figur 2. Hier wird deutlich, dass es sich bei den Keramikbauteilen 2 beispielsweise um Zahnräder handelt. Diese weisen eine Mittelachse M auf, die im wesentlichen parallel zu einer Flächennormalen der Anspritzquerschnittsfläche und somit gleichzeitig der Flachseite 30 verläuft sowie eine Längsachse L des Keramikbauteils 2 bildet. Die Mittelachse verläuft konzentrisch zu einer Ausnehmung bzw. einem Hohlraum 21, der vor dem Entfernen des Trägers eine Sacklochbohrung darstellt und aus dem nach dem Entfernen des Trägers 3 im vorliegenden Ausführungsbeispiel eine Durchgangsbohrung zur Aufnahme einer Lagerachse des als Zahnrad ausgestalteten Keramikbauteils gebildet wird. Ferner besitzt das Keramikbauteil 2 einen Aussenumfang 22, entlang den vorliegenden Ausführungsbeispiel Zähne des Zahnrades angeordnet sind. Eine Oberseite 23 des Keramikbauteils ist von der Flachseite 30 des Trägers 3 abgewandt.

Figur 4 zeigt das Keramikteil 1 in einer weiteren schematischen Perspektivansicht. Hier wird insbesondere deutlich, dass der Träger 30 mehrere Freiräume bzw. Durchgänge 31 und einen im Wesentlichen kreisrunden Aussenumfang 32 aufweist. Die Freiräume 31 erstrecken sich von der Flachseite 30 bis zu einer Unterseite 33 des Trägers 3 entgegen der Höhenrichtung Z. Zur Unterseite 33 hin sind die Freiräume 31 mit einer Fase 34 versehen. Die Freiräume 31 sind im Wesentlichen unter gleichen Abständen zueinander entlang einer Kreisbahn K positioniert, die konzentrisch zu einer zentralen Achse C des Keramikteils 1 angeordnet ist. Die zentrale Achse C wiederum bildet eine Mittelachse des sich senkrecht von der Unterseite 33 weg erstreckenden Angusses 4. Zugleich ist der Aussenumfang 30 konzentrisch um die zentrale Achse C herum angeordnet. Diese um die zentrale Achse C quasi rotationssymmetrische Ausgestaltung des Keramikteils 1 erleichtert ein gleichmässiges Füllen einer Kavität zu dessen Herstellung durch Spritzgiessen.

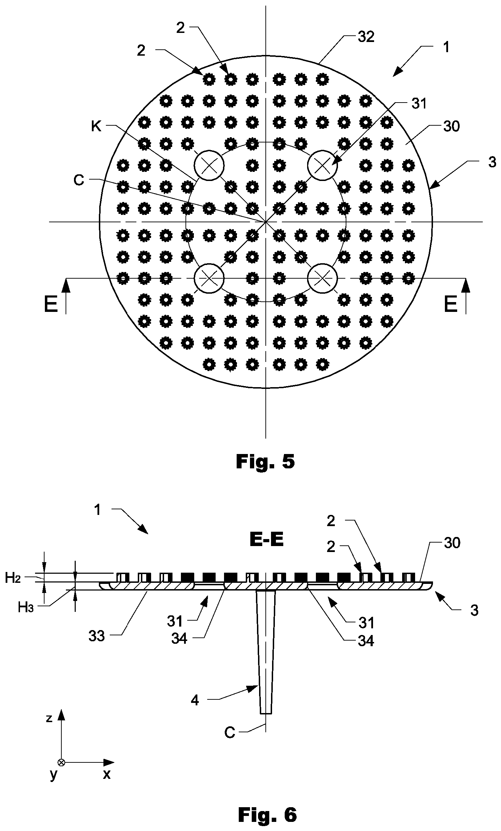

Figur 5 zeigt das Keramikteil 1 in einer schematischen Vorderansicht. Hier wird deutlich, wie die Keramikbauteile 2 rasterartig auf der Flachseite 30 des Trägers 3 angeordnet sind. Im vorliegenden Ausführungsbeispiel handelt es sich um 144 Keramikbauteile 2. Des Weiteren wird die Anordnung der Freiräume 31 auf einer konzentrisch um die Zentrale Achse C herum verlaufenden Kreisbahn K deutlich.

Figur 6 zeigt eine schematische Querschnittsansicht des Keramikteils 1 entlang einer in Figur 5 eingezeichneten Schnittlinie E-E. Hier wird besonders deutlich, wie sich die Keramikbauteile 2 in Höhenrichtung Z im Wesentlichen senkrecht von der Flachseite 30 des Trägers 3 weg erstrecken, wobei ihre Mittelachsen M im Wesentlichen parallel zur zentralen Achse C verlaufen. Auch wird deutlich, dass die Flachseite 30 des Trägers einen Boden der Ausnehmungen 21 der Keramikbauteile 2 bildet. Die so durch den Träger 3 begrenzten Ausnehmungen liegen vor der weiteren Verarbeitung des Keramikteils 1 also als Sacklöcher vor.

Zur weiteren Verarbeitung des Keramikteils 1 ist der Träger 3 erfindungsgemäß von den Keramikbauteilen 2 zu entfernen. Beispielsweise können dazu die Keramikbauteile 2 zunächst in Höhenrichtung Z in eine Haltemasse eingedrückt werden, bis diese die Keramikbauteile 2 vollständig umschliesst. Dies ist in der Regel der Fall, wenn die gesamte Flachseite 30 des Trägers 3 in Kontakt mit der Haltemasse steht, die also bestenfalls auch in die Ausnehmungen 21 der Keramikbauteile 2 eingedrungen sein und diese vollständig ausfüllen sollte. Anhand der Freiräume 31 kann überprüft werden, ob das Keramikteil 1 ordnungsgemäß in die Haltemasse eingebettet ist, in dem diese beispielsweise entgegen der Höhenrichtung Z aus den Freiräumen 30 zur Unterseite 33 hin hervor ragt. Die Fasen 34 können eine Überprüfung der ordnungsgemässen Einbettung vereinfachen, indem die Haltemasse im ordnungsgemäss eingebetteten Zustand des Keramikteils 1 soweit aus den Freiräumen hervorquillt, dass sie jeweils über die Fasen 34 tritt.

Anschließend kann der Träger 3 entfernt werden. Das Entfernen geschieht so, dass der in die Haltemasse eingebettete Träger von seiner Unterseite 33 aus zerspant wird. Nach dem Zerspanen ist der Träger 3 in seiner gesamten Höhe H₃ abgetragen und es verbleiben die von der Haltemasse umschlossenen Keramikbauteile 2. Durch Entfernen der Haltemasse können die Keramikbauteile 2 vereinzelt werden. Vorteilhafter Weise übersteigt eine Höhe H₂ der mit dem Träger 3 verbundenen Keramikbauteile 2 ihre gewünschte abschließende Höhe, sodass ein Toleranzbereich besteht, der beispielsweise dazu genutzt werden kann, etwaige Verzüge des Trägers 3 auszugleichen, die durchs Sintern des Keramikteils 1 hervorgerufen werden können.

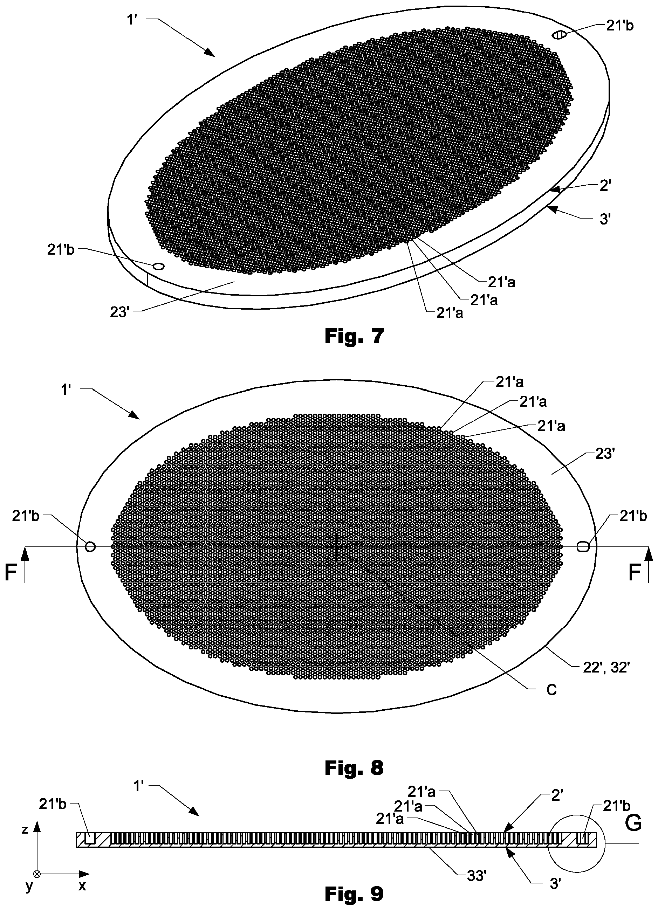

Figur 7 zeigt ein weiteres Ausführungsbeispiel eines Keramikteils 1' mit einem Keramikbauteil 2' und einem Träger bzw. Tragabschnitt 3 in einer schematischen Perspektivansicht. Im Gegensatz zum Keramikteil 1 ist der Tragabschnitt 3 lediglich mit dem einen einzigen gitterartigen Keramikbauteil 2' verbunden, wobei es sich beispielsweise um eine Elektrode oder ein Gitter eines Lautsprechers handeln kann. Beim in Figur 7 gezeigten Ausführungsbeispiel ist eine Stirnseite bzw. Anspritzquerschnittsfläche 20' des Keramikbauteils 2 in einer Projektion entlang der Höhenrichtung Z vom gesamten Tragabschnitt 3' abgedeckt (siehe Figur 9).

Das Keramikbauteil 2' besitzt Ausnehmungen bzw. Hohlräume 21'a, die sich entgegen der Höhenrichtung Z von einer Oberseite 23' des Keramikbauteils 2' weg bis zu dessen in Figur 7 durch den Träger 3 verdeckten Stirnseite 20 hin erstrecken. Somit handelt es sich bei den Ausnehmungen 21'a ähnlich wie bei Keramikteil 1 vor der weiteren Verarbeitung um Sacklöcher. Weitere Ausnehmungen bzw. Hohlräume 21'b des Keramikteils 1 liegen beim in Figur 7 gezeigten Ausführungsbeispiel ebenfalls zunächst in Form von Sacklöchern vor.

Figur 8 zeigt das Keramik Teil 1' in einer schematischen Vorderansicht. Hier wird deutlich, dass das Keramikteil 1' einen im Wesentlichen ovalen Aussenumfang aufweist, der sowohl einen Aussenumfang 22' des Keramikbauteils 2 als auch einen Aussenumfang 32 des Tragabschnittes 3 ausbildet und konzentrisch um die zentrale Achse C des Keramikteils 1' angeordnet ist.

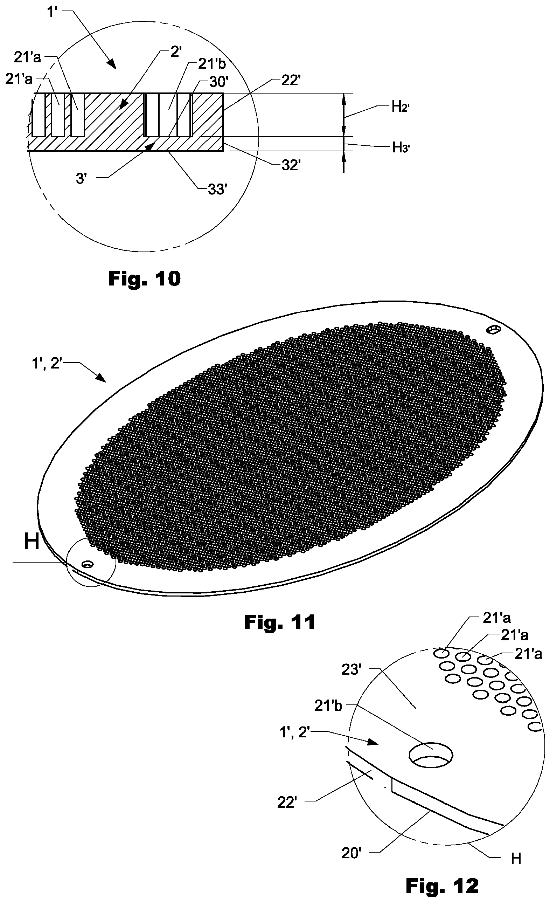

Figur 9 zeigt eine schematische Querschnittsansicht des Keramikteils 1 entlang einer in Figur 8 eingezeichneten Schnittlinie F-F. Figur 10 zeigt ein Detail G aus Figur 9. Aus den Figuren 9 und 10 wird deutlich, dass eine Unterseite 33 des Trägerschnittes 3' vor der weiteren Verarbeitung vollständig geschlossen sein kann. Somit können sämtliche Ausnehmungen bzw. Hohlräume 21'a, 21'b als Sacklöcher vorliegen, deren jeweiligen Böden durch eine Flachseite 30 des Trägers 3 gebildet ist.

Beim Keramikteil 1' kann ähnlich wie beim Keramikteil 1 der Tragabschnitt 3' vom Keramikbauteil 2' entfernt und somit die Freiräume 31' geöffnet werden. Beispielsweise kann dazu das Keramikbauteil 2' zusammen mit dem Tragabschnitt 3' in Höhenrichtung Z in eine Haltemasse getaucht bzw. eingebettet werden, sodass optimaler Weise die Ausnehmungen bzw. Hohlräume 21'a, 21'b mit Haltemasse gefüllt und womöglich auch die Aussenumfänge 22', 32' von Haltemasse umgeben sind. Zur weiteren Verarbeitung kann der Tragabschnitt 3' ebenfalls durch Zerspanen vom Keramikbauteil 2' entfernt werden.

Figur 11 zeigt das Keramikteil 1' nach dem Entfernen des Tragabschnittes 3' und somit allein das Keramikbauteil 2' in einer schematischen Perspektivansicht. Figur 12 zeigt ein Detail H aus Figur 11. Hier ist verdeutlicht, dass durch Entfernen des Tragabschnittes 3' die Ausnehmungen bzw. Hohlräume 21'a, 21'b geöffnet und daraus Durchgangslöcher erzeugt sind.

Abweichungen von den oben beschriebenen Ausführungsbeispielen sind im Rahmen des Erfindungsgedankens möglich. So können die Keramikteile 1, 1' Keramikbauteile 2, 2', Träger bzw. Tragabschnitte 3, 3' sowie an Angüsse 4 in den jeweiligen Anforderungen entsprechender Anzahl und Ausgestaltung aufweisen.

Keramikbauteile 2, 2' können Stirnseiten 20, 20' in beliebiger Forma und Anzahlausweisen, die den jeweiligen Anforderungen gemäß Anspritzquerschnittsfläche aus bilden und mit Ausnehmungen bzw. Hohlräumen 21, 21'a, 21'b versehen sein können, die in beliebiger Anzahl pro Keramikbauteil 2, 2' und/oder pro Träger bzw. Tragabschnitt 3, 3' vorgesehen sein können. Die Außenumfänge 22, 22' und/oder Oberseiten 23, 23' der Keramikbauteile 2,2 können den jeweiligen Anforderungen gemäß ausgestaltet sein.

Träger bzw. Tragabschnitte 3, 3' können mit einer beliebigen Anzahl den jeweiligen Anforderungen gemäss ausgestalteter Flachseiten 30, 30', Freiräumen bzw. Durchgängen 31, 31', Aussenumfängen 32, 32', Unterseiten 33, 33' und/oder Fasen 34 versehen sein. Die Träger bzw. Tragabschnitte 3, 3' sind zur möglichst gleichmässigen Füllung der Kavität vorteilhafter Weise Rund ausgestaltet und weisen bei den Vorliegenden Ausführungsbeispielen Durchmesser von ca. 80 mm auf, können aber den jeweiligen Anforderungen gemäss auch anders geformt und dimensioniert sein.

Das erfindungsgemässe Verfahren ist nicht auf die Herstellung der hier beschriebenen technischen Keramikbauteile beschränkt, sondern kann zur Herstellung beliebiger Bauteile aus Keramik verwendet werden, insbesondere, wenn diese in einer gewissen Stückzahl bzw. standardisiert herzustellen sind. Als standardisierte Bauteile kommen beispielsweise Teile von medizinischen Implantaten, wie Zahnimplantaten in Frage, die derzeit in einem herkömmlichen Doppelkammerspritzgussverfahren hergestellt werden.

### Bezugszeichenliste

- 1, 1': Keramikteil
- 2, 2': Keramikbauteil
- 3, 3': Träger / Tragabschnitt
- 4: Anguss

- 20, 20': Stirnseite / Anspritzquerschnittsfläche
- 21, 21'a, b: Ausnehmung / Hohlraum
- 22, 22': Aussenumfang
- 23, 23': Oberseite

- 30, 30': Flachseite
- 31: Freiräume / Durchgänge
- 32, 32': Aussenumfang
- 34: Fase

- C: Zentrale Achse
- H: Höhe
- K: Kreisbahn
- L: Längsachse
- M: Mittelachse
- X: Längsrichtung
- Y: Querrichtung
- Z: Höhenrichtung

## Patentansprüche

1. Verfahren zur Herstellung von Keramikbauteilen (2, 2'), insbesondere von Keramikbauteilen (2, 2') mit Ausnehmungen und/oder Hohlräumen (21, 21'a, 21'b), **dadurch gekennzeichnet, dass**
mindestens ein gesintertes Keramikteil (1, 1') bereitgestellt wird, umfassend einen Träger oder Tragabschnitt (3, 3') mit einer Flachseite (30, 30'), auf welcher eine Vielzahl von Keramikbauteilen (2, 2') angeordnet ist; und
der Träger oder Tragabschnitt von der Vielzahl der Keramikbauteile entfernt wird, wodurch die Vielzahl von Keramikbauteilen vereinzelt wird;
wobei zum Entfernen des Trägers oder Tragabschnitts von der Vielzahl der Keramikbauteile
- die auf der Flachseite des Trägers oder Tragabschnitts angeordnete Vielzahl von Keramikbauteilen in eine Haltemasse eingebettet wird, so dass die Haltemasse ein oder mehrere der auf der Flachseite des Trägers oder Tragabschnitts angeordneten Keramikbauteile umschliesst und die Flachseite des Trägers oder Tragabschnitts möglichst vollständig mit der Haltemasse in Kontakt steht;
- der Träger oder Tragabschnitt von einer der Flachseite gegenüberliegenden Unterseite (33, 33') des Trägers oder Tragabschnitts her vollständig abgetragen wird, so dass die von der Haltemasse umschlossenen Keramikbauteile verbleiben; und
- durch das Entfernen der Haltemasse die Keramikbauteile vereinzelt werden.

2. Verfahren nach Anspruch 1, **dadurch gekennzeichnet, dass** durch das Entfernen des Trägers oder Tragabschnittes (3, 3') mindestens ein Hohlraum oder eine Ausnehmung (21, 21'a, 21'b) am wenigstens einen Keramikbauteil (2, 2') freigelegt wird.

3. Verfahren nach Anspruch 2, **dadurch gekennzeichnet, dass** der mindestens eine Hohlraum oder die mindestens eine Ausnehmung (21, 21'a, 21'b) wenigstens abschnittsweise eine Durchgangsöffnung (31) im wenigstens einen Keramikbauteil (2, 2') bildet.

4. Verfahren nach wenigstens einem der Ansprüche 1 bis 3, **dadurch gekennzeichnet, dass** das gesinterte Keramikteil (1, 1') bei der weiteren Verarbeitung zerspant wird.

5. Verfahren nach einem der Ansprüche 1 bis 4, **dadurch gekennzeichnet, dass** das Keramikteil (1, 1') in die Haltemasse eingedrückt wird.

6. Verfahren nach Anspruch 5, **dadurch gekennzeichnet, dass** die Haltemasse nach der weiteren Verarbeitung mit bzw. in einem Lösungsmittel vom Keramikteil (1, 1') ab- und/oder aufgelöst wird.

7. Verfahren nach Anspruch 6, **dadurch gekennzeichnet, dass** die Haltemasse wasser- und/oder alkohollöslich ist und nach der weiteren Verarbeitung in Wasser und/oder einem Alkohol gelöst wird.

8. Verfahren nach wenigstens einem der Ansprüche 5 bis 7, **dadurch gekennzeichnet, dass** die Haltemasse im Wesentlichen aus Zucker und/oder Harz gebildet ist.

9. Verfahren nach wenigstens einem der Ansprüche 5 bis 8, **dadurch gekennzeichnet, dass** die Haltemasse in wenigstens einen Freiraum des Keramikteils (1, 1'), des Trägers und/oder des Tragabschnitts (3, 3') eindringt, um einen zur weiteren Verarbeitung erforderlichen Einbettungsgrad des Keramikteils (1, 1'), des Trägers und/oder des Tragabschnitts (3, 3') zu überprüfen bzw. zu gewährleisten.

10. Verfahren nach wenigstens einem der Ansprüche 1 bis 9, **dadurch gekennzeichnet, dass** in einem Urformschritt (S2, S3, S4) ein Grünkörper zur Herstellung des Keramikteils (1, 1') spritzgegossen wird.

11. Verfahren nach Anspruch 10, **dadurch gekennzeichnet, dass** eine Anspritzbasis des Keramikbauteils (2, 2') zumindest in einem Übergangsabschnitt zum Träger oder Tragabschnitt (3, 3') eine Anspritzquerschnittsfläche aufweist, die mindestens so gross ist, wie eine maximale Bauteilquerschnittsfläche des Keramikbauteils (2, 2').

12. Verfahren nach Anspruch 11, **dadurch gekennzeichnet, dass** eine Längsachse (L) des Keramikbauteils (2, 2') im Wesentlichen parallel zu einer Flächennormalen der Anspritzquerschnittsfläche und/oder der Bauteilquerschnittsfläche verläuft.

13. Verfahren nach Anspruch 12, **dadurch gekennzeichnet, dass** das Keramikbauteil (2, 2') sich zumindest abschnittsweise entlang seiner Längsachse (L) in Richtung von der Anspritzquerschnittsfläche und/oder der Bauteilquerschnittsfläche weg verjüngt.

14. Verfahren nach wenigstens einem der Ansprüche 1 bis 13, **dadurch gekennzeichnet, dass** nach dem Urformschritt (S2, S3, S4) und vor dem Sintern ein sekundärer Formgebungsschritt (S5) und/oder Oberflächenbearbeitungsschritt (S6) am Grünkörper und/oder an einem aus dem Grünkörper gewonnenen Braunkörper durchgeführt wird.

15. Verfahren nach wenigstens einem der Ansprüche 1 bis 14, **dadurch gekennzeichnet, dass** in einem Urformschritt (S2, S3, S4) ein Grünkörper zur Herstellung des Keramikteils (1, 1') durch 3D-Druck hergestellt wird.

## Claims

1. A method of manufacturing ceramic components (2, 2'), in particular ceramic components (2, 2') with recesses and/or cavities (21, 21'a, 21'b),
**characterized in that**
at least one sintered ceramic part (1, 1') is provided, comprising a carrier or carrier section (3, 3') with a flat side (30, 30') on which a plurality of ceramic components (2, 2') is arranged; and
the carrier or carrier section is removed from the plurality of ceramic components, whereby the plurality of ceramic components are separated;
wherein for the removal of the carrier or carrier section from the plurality of ceramic components
- the plurality of ceramic components arranged on the flat side of the carrier or carrier section is embedded in a holding mass so that the holding mass encloses one or more of the ceramic components arranged on the flat side of the carrier or carrier section and the flat side of the carrier or carrier section is in contact as completely as possible with the holding mass;
- the carrier or carrier section is completely removed from an underside (33, 33') of the carrier or carrier section opposite the flat side, so that the ceramic components enclosed by the holding mass remain; and
- the ceramic components are separated by the removal of the holding mass.

2. The method according to claim 1, **characterized in that** at least one cavity or recess (21, 21'a, 21'b) least exposes one ceramic component (2, 2') by the removal of the carrier or carrier section (3, 3').

3. The method according to claim 2, **characterized in that** the at least one cavity or the at least one recess (21, 21'a, 21'b) forms at least in sections a passage opening (31) in at least one ceramic component (2, 2').

4. The method according to at least one of claims 1 to 3, **characterized in that** the sintered ceramic part (1, 1') is machined during the further processing.

5. The method according to any one of claims 1 to 4, **characterized in that** the ceramic part (1, 1') is pressed into the holding mass.

6. The method according to claim 5, **characterized in that** the holding mass is detached and/or dissolved from the ceramic part (1, 1') with or in a solvent after the further processing.

7. The method according to claim 6, **characterized in that** the holding mass is water- and/or alcohol-soluble and is dissolved in water and/or alcohol after the further processing.

8. The method according to at least one of claims 5 to 7, **characterized in that** the holding mass is essentially formed out of sugar and/or resin.

9. The method according to at least one of claims 5 to 8, **characterized in that** the holding mass protrudes in at least one cavity of the ceramic part (1, 1') of the carrier and/or carrier section (3, 3'), as to check or ensure a degree of embedding of the ceramic part (1, 1'), the carrier and/or the carrier section (3, 3') required for the further processing.

10. The method according to at least one of claims 1 to 9, **characterized in that** in an initial forming step (S2, S3, S4) a green body for the production of the ceramic part (1, 1') is injection molded.

11. The method according to claim 10, **characterized in that** the injection base of the ceramic component (2, 2') has an injection cross-sectional area at least in a transitional section to the carrier or carrier section (3, 3'), which is at least as big as a maximal component cross-sectional area of the ceramic component (2, 2').

12. The method according to claim 11, **characterized in that** a longitudinal axis (L) of the ceramic component (2, 2') runs essentially parallel to a surface normal of the injection cross-sectional area and/or the component cross-sectional area.

13. The method according to claim 12, **characterized in that** the ceramic component (2, 2') tapers at least in sections along its longitudinal axis (L) in the direction away from the injection cross-sectional area and/or the component cross-sectional area.

14. The method according to at least one of claims 1 to 13, **characterized in that**, after the initial forming step (S2, S3, S4) and before the sintering a secondary shaping step (S5) and/or surface processing step (S6) is carried out on the green body and/or on a brown body obtained out of the green body.

15. The method according to at least one of claims 1 to 14, **characterized in that** in an initial forming step (S4, S5, S6) a green body for the production of the ceramic part (1, 1') is produced through 3D-printing.

## Revendications

1. Procédé de fabrication de composants en céramique (2, 2'), en particulier de composants en céramique (2, 2') comportant des évidements et/ou des cavités (21, 21'a, 21'b), **caractérisé en ce que**
au moins une pièce en céramique (1, 1') frittée est fournie, comprenant un support ou une section de support (3, 3') comportant une face plate (30, 30') sur laquelle sont disposés une pluralité de composants en céramique (2, 2') ; et
le support ou la section de support est retiré de la pluralité de composants en céramique, moyennant quoi la pluralité de composants en céramique sont séparés ;
dans lequel, pour le retrait du support ou de la section de support de la pluralité de composants en céramique
- la pluralité de composants en céramique disposés sur la face plate du support ou de la section de support sont incorporés dans une matière de maintien, de sorte que la matière de maintien entoure un ou plusieurs des composants en céramique disposés sur la face plate du support ou de la section de support et la face plate du support ou de la section de support est en contact de manière aussi complète que possible avec la matière de maintien ;
- le support ou la section de support est entièrement enlevé depuis une face inférieure (33, 33') du support ou de la section de support qui est opposée à la face plate, de sorte que les composants en céramique entourés par la matière de maintien restent ; et
- les composants en céramique sont séparés par le retrait de la matière de maintien.

2. Procédé selon la revendication 1, **caractérisé en ce que,** par le retrait du support ou de la section de support (3, 3'), au moins une cavité ou un évidement (21, 21'a, 21'b) au niveau d'au moins un composant en céramique (2, 2') est libéré.

3. Procédé selon la revendication 2, **caractérisé en ce que** l'au moins une cavité ou l'au moins un évidement (21, 21'a, 21'b) forme, au moins dans certaines sections, une ouverture de passage (31) dans au moins un composant en céramique (2, 2')

4. Procédé selon au moins l'une des revendications 1 à 3,
**caractérisé en ce que** la pièce en céramique (1, 1') frittée est usinée lors du traitement ultérieur.

5. Procédé selon l'une des revendications 1 à 4, **caractérisé en ce que** la pièce en céramique (1, 1') est enfoncée dans la matière de maintien.

6. Procédé selon la revendication 5, **caractérisé en ce que** la matière de maintien est détachée et/ou dissoute de la pièce en céramique (1, 1') avec ou dans un solvant après le traitement ultérieur.

7. Procédé selon la revendication 6, **caractérisé en ce que** la matière de maintien est soluble dans l'eau et/ou dans l'alcool et est dissoute dans de l'eau et/ou dans un alcool après le traitement ultérieur.

8. Procédé selon au moins l'une des revendications 5 à 7,
**caractérisé en ce que** la matière de maintien est formée sensiblement à partir de sucre et/ou de résine.

9. Procédé selon au moins l'une des revendications 5 à 8,
**caractérisé en ce que** la matière de maintien pénètre dans au moins un espace libre de la pièce en céramique (1, 1'), du support et/ou de la section de support (3, 3') afin de vérifier ou de garantir un degré d'incorporation de la pièce en céramique (1, 1'), du support et/ou de la section de support (3, 3') nécessaire au traitement ultérieur.

10. Procédé selon au moins l'une des revendications 1 à 9,
**caractérisé en ce que,** dans une étape de moulage primaire (S2, S3, S4), un corps vert est moulé par injection pour la fabrication de la pièce en céramique (1, 1').

11. Procédé selon la revendication 10, **caractérisé en ce qu'**une base d'injection du composant en céramique (2, 2') présente, au moins dans une section de transition vers le support ou la section de support (3, 3'), une surface de section transversale d'injection qui est au moins aussi grande qu'une surface de section transversale de composant maximale du composant en céramique (2, 2').

12. Procédé selon la revendication 11, **caractérisé en ce qu'**un axe longitudinal (L) du composant en céramique (2, 2') s'étend sensiblement parallèlement à une normale de surface de la surface de section transversale d'injection et/ou de la surface de section transversale de composant.

13. Procédé selon la revendication 12, **caractérisé en ce que** le composant en céramique (2, 2') se rétrécit, au moins dans certaines sections, le long de son axe longitudinal (L) en s'éloignant de la surface de section transversale d'injection et/ou de la surface de section transversale de composant.

14. Procédé selon au moins l'une des revendications 1 à 13,
**caractérisé en ce qu'**après l'étape de moulage primaire (S2, S3, S4) et avant le frittage, une étape de formage secondaire (S5) et/ou une étape de traitement de surface (S6) sont réalisées sur le corps vert et/ou sur un corps brun obtenu à partir du corps vert.

15. Procédé selon au moins l'une des revendications 1 à 14,
**caractérisé en ce que,** dans une étape de moulage primaire (S2, S3, S4), un corps vert pour la fabrication de la pièce en céramique (1, 1') est fabriqué par impression 3D.
